# EUROPÄISCHE PATENTANMELDUNG

(11) **EP 4 549 488 A1**
(43) Veröffentlichungstag der Anmeldung: **07.05.2025**
(21) Anmeldenummer: 24207738.6
(22) Anmeldetag: 21.10.2024
(51) Int. Cl.: C08G 77/08, C08G 77/12, C08L 83/04

(54) **VERFAHREN ZUR HERSTELLUNG VON WASSERSTOFFSILOXANEN**

(30) Priorität: 31.10.2023 EP 23206871; 09.11.2023 EP 23208762
(71) Anmelder: Evonik Operations GmbH, 45128 Essen (DE)
(72) Erfinder: Knott, Wilfried, 45355 Essen (DE); Lobert, Matthias, 45309 Essen (DE); Havekost, Christian, 46282 Dorsten (DE)
(74) Vertreter: Evonik Patent Association

(57) **Zusammenfassung**

Die Erfindung betrifft ein Verfahren zur Herstellung von Wasserstoffsiloxanen unter Verwendung von säuremodifiziertem Aluminiumsilikat als Äquilibrierungskatalysator, wobei man ein aus mindestens zwei Siloxanen bestehendes Siloxangemisch, das mindestens ein SiH-funktionelles Siloxan enthält, unter Durchmischung mit pulverförmigem Aluminiumsilikat beaufschlagt und unter Hinzufügen von Säure das säuremodifizierte Aluminiumsilikat in-situ herstellt, und das dabei resultierende Reaktionsgemisch unter weiterer Durchmischung im Sinne einer Äquilibrierung reagieren lässt.

## Beschreibung

Die vorliegende Erfindung liegt auf dem Gebiet der Siloxane. Insbesondere betrifft sie ein Verfahren zur Herstellung von Wasserstoffsiloxanen.

Die Verwendung säurebehandelter Bleicherden, das heißt, von säurebehandelten Aluminiumsilikaten als Katalysatoren in der industriellen Herstellung von Silikonprodukten ist bekannt.

So lehrt die US 2,460,805 die Herstellung und Verwendung säureaktivierter Bleicherden zur Kondensation von SiOH-Gruppen aufweisenden Organosiloxanen zu Polymeren höherer Molmasse. Die dort verwendeten porösen Erden oder Lehmmineralien (Florida-Erde, Kambara-Erde, Bentonit bzw. andere wässrige Aluminiumsilikate) besitzen große spezifische Oberflächen und werden mit einer Mineralsäure imprägniert, dann bei 100°C oder noch höherer Temperatur getrocknet und auf den gewünschten Grad an Partikelfeinheit heruntergemahlen, um die so gewonnenen Partikel daraufhin in dem zu kondensierenden Siloxanol zu dispergieren. Die Lehre US 2,460,805 spricht von einer einfachen Handhabbarkeit und Lagerstabilität des säurebehandelten Aluminiumsilikats.

Gleichfalls stellt die Patentschrift DE 957 662 C (US 2,831,008), die sich der Herstellung von Silikonölen widmet, im Beispiel 4 auf die Verwendung säureaktivierter, neutral gewaschener Bleicherde bei der Umsetzung von Oktamethylcyclotetrasiloxan mit Hexamethyldisiloxan ab, wobei als Hauptprodukt Oktamethyltrisiloxan entsteht.

Auf Silanolpolydiorganosiloxane mit Viskositäten zwischen 1.000 und 10.000.000 Centipoise abzielend, offenbart US 3,903,047 die Umsetzung niedrigviskoser, Silanolgruppen tragender Flüssigkeiten mit zyklischen Polysiloxanen, wobei ein breiter Reigen zuvor säureaktivierter Aluminiumsilikate als bevorzugte Katalysatoren genannt sind.

DE 197 56 832 A1 offenbart den Einsatz säureaktivierter Bleicherden, gewonnen durch die Behandlung von Tonen, die als Schichtsilikate das Verwitterungsprodukt Aluminiumoxid-haltiger Gesteine darstellen, als Katalysator für die Kondensation bzw. Äquilibrierung von Hydroxyl-, Alkoxy, Chlor oder Triorganosilylgruppen enthaltenden Siloxanen mit Siloxanzyklen und Hexaorganodisiloxanen, wobei kommerziell verfügbarer säureaktivierter Ton (Tonsil^{®}, oder Filtrol^{®}), bei Temperaturen von 80°C bis 170°C mit Mineralsäuren wie Salzsäure, Schwefelsäure oder Phosphorsäure behandelt wird und danach die säureaktivierten Tone für mindestens 50 Minuten auf 250°C bis 1200°C erhitzt werden.

Die Umverteilung von SiH-Bindungen im Temperaturbereich von 50 bis 250°C beschreibend, lehrt US 3,398,177, dass man die Azidität der dort eingesetzten Aluminiumsilikate erhöhen kann, indem man diese mit Lösungen wässriger starker anorganischer Säuren wie HCl oder H₂SO₄ wäscht oder eine andere Säurebehandlung mit anschließender Erhitzung des Aluminiumsilikates wählt. Das ebenda in Beispiel 12 eingesetzte, säuregewaschene Kaolin (d) zeigt sich im Vergleich mit anderen sauren Festphasen und selbst im Vergleich mit einem kolloidalen, natürlichen Kaolin (c) nach Offenbarung der US 3,398,177 jedoch nur als ein bescheidener Katalysator (66,4% vs. 89,6% Ausbeute) bei der Dimethylsilanabspaltung aus Tetramethyldisiloxan bei 109°C über 23 Stunden Reaktionszeit (Kondensationsreaktion).

DE 44 24 115 A1 offenbart ein Verfahren zum Herstellen linearer, Triorganosiloxyendgruppen aufweisender Silicon-Flüssigkeiten mit geringem Silanolgehalt, wobei auch säurebehandelte Tongranulate (Filtrol^{®}-24) zum Einsatz kommen.

US 5,239,101 offenbart ein wasserfreies Verfahren zur Herstellung Organosiloxyendverschlossener Polyorganosiloxane aus Chlor-endverschlossenen Polyorganosiloxanen, wobei saure Tonerden, die man aus Haloysit, Kaolinit und aus Montmorilloniten zusammengesetzten Bentoniten gewinnt, dabei als Umlagerungskatalysator dienen.

In etwas anderer Ausgestaltung offenbart US 5,233,070 die Verwendung saurer Tonerden auch als Katalysator für die Herstellung von Polyorganocyclosiloxanen ausgehend von Chlor-endverschlossenen Polyorganosiloxanen.

Der Umlagerung linearer, Chlor- oder Hydroxy-endverschlossener Polyorganosiloxane mit zyklischen Polyorganosiloxanen gewidmet, wird in US 5,068,383 der Einsatz säurebehandelter Tonerde als Umlagerungskatalysator beschrieben.

US 4,895,967 beschreibt ein Verfahren zur Herstellung zyklischer Poly(siloxane), wobei bei Temperaturen zwischen 200°C und 800°C und in vorteilhafter Weise bei angelegtem Hilfsvakuum, zyklische Organohydrogensiloxane aus linearen Wasserstoffsiloxanen durch Kontaktieren mit einer sauren Tonerde (Filtrol^{®}-20) thermisch ausgekreist werden.

US 4,831,174 offenbart die Herstellung Triorganosilyl-endverschlossener Polydiorganosiloxanflüssigkeiten unter Nutzung säureaktivierter Tonerden in einem kontinuierlichen Prozess. US 4,230,816 offenbart die Äquilibrierung (Alkylthio)- oder Mercaptoalkylgruppen tragender Siloxane in der Gegenwart saurer Katalysatoren. Neben einer Reihe flüssiger, starker Säuren kommen Filtrol^{®}-13 und Filtrol^{®}-24 (Filtrol Corporation) als säurebehandelte Tonerden zum Einsatz.

GB 922,377 beschreibt für die Herstellung von Organo-hydrogenpolysiloxanen Phyllo- und Inosilikate und zeigt dabei, dass sich speziell zuvor Säure aktivierte, aber auch einige, nicht Säure aktivierte Aluminiumsilikate (Calciumbentonit in Beispiel 3, Natriumbentonit in Beispiel 4, Atapulgit "Floridin" in Beispiel 5, alle ibid.) für die Herstellung von α,ω-Dihydrogenpolydimethylsiloxanen eignen. Im Falle der zuvor mit Säure aktivierten Bleicherde wird diese nach Säurebehandlung zunächst neutral gewaschen und dann bei ca. 200°C getrocknet. Bei vergleichenden Versuchen, Tetramethyldisiloxan mit Octamethylcyclotetrasiloxan zu äquilibrieren, zeigte sich gemäß GB 922,377, dass konzentrierte Schwefelsäure als Katalysator nach 5 stündigem Erwärmen auf 50°C nur unvollständige Reaktion bewirkt. 5 weitere Stunden Umsetzung zunächst unter Rückflusssieden des Tetramethyldisiloxans bei 71°C, dann unter Temperaturerhöhung auf 100°C ergab dann ein Äquilibrat jedoch mit deutlichem Verlust an wertvoller SiH-Funktion. Der Einsatz von Kaolin als Katalysator in einem analogen Experiment zeigte gemäß GB 922,377, dass selbst nach Erhitzen auf 150°C kein Wasserstoffverlust zu verzeichnen war, dass die Reaktion allerdings auch unvollständig blieb.

Der Herstellung von Wasserstoff enthaltenden Silikonölen mit terminalen SiH-Gruppen mit Hilfe einer Polymerisationsreaktion ist die Offenbarung der CN 103524743 A gewidmet, die beschreibt, dass man wasserstoffreiches Polysiloxan und Cyclosiloxan unter Hinzufügen eines organischen Lösungsmittels mit einem terminale SiH-Gruppen tragenden Siloxan unter der Wirkung eines sauren Katalysators, wie zum Beispiel einer säureaktivierten Tonerde, zur Reaktion bringt und dann unter Wassereintrag ein zweiphasiges Stoffsystem erzeugt. Die angesäuerte Wasserphase wird abgetrennt und der Wassereintrag und die Abtrennung der säuretragenden Wasserphase werden 4mal wiederholt. Die organische Phase enthält neben Lösungsmittel ein terminale SiH-Gruppen tragendes Wasserstoffsiloxanöl, nicht reagiertes, wasserstoffreiches Polysiloxan und Siloxanzyklen, also ist die Siloxanmatrix gemäß Offenbarung der CN 103524743 A definitiv kein Äquilibrat. Eine aufwendige Vakuumdestillation bei 0,095MPa Druck und 180°C ist notwendig, um nach dem Abtrennen der Flüchtigen, ein Wasserstoff enthaltendes Silikonöl mit terminalen SiH-Gruppen zu isolieren.

Im Stand der Technik wird auch die Herstellung säureaktivierter Aluminiumsilikate beschrieben.

Z.B. führen W. Gao, S. Zhao, H. Wu, W.Deligeer und S. Asuha in "Direct acid activation of kaolinite and its effects on the adsorption of methylene blue", Applied Clay Science 126 (2016), 98-106 auf Seite 99, ibid. aus, dass die Aktivierung eines natürlichen Kaolinminerals durch Säurebehandlung schwierig sei, da dieses Material inaktiv sei und somit eine Hitzebehandlung bei Temperaturen zwischen 600 und 800°C vor der Säurebehandlung unerlässlich sei.

Solche Auffassung stützen auch deutlich ältere Arbeiten des Standes der Technik, die sich mit Verfahren zur Herstellung säureaktivierten Kaolintons beschäftigen, wie zum Beispiel US 2,477,664, wo ein Kaolinton zunächst pelletiert und dann bei 566°C für 2 Stunden kalziniert wird. Dann schließen sich eine Säurebehandlung mit 15%iger Salzsäure und eine druckbeaufschlagte Wasserbehandlung in einem Autoklaven bei 232°C an.

Zur weiteren Verdeutlichung des gemäß Stand der Technik zu treibenden, verfahrenstechnischen Aufwands sei hier z.B. auf den Artikel von A.K.Panda, B.G. Mishra, D.K.Mishra, R.K. Singh "Effect of sulphuric acid treatment on the physico-chemical characteristics of kaolin clay" in Colloid and Surfaces A: Physicochem. Eng. Aspects 363 (2010), 98 -104 verwiesen, worin die Autoren den zu aktivierenden, natürlichen Kaolin mit der 10fachen Menge an Schwefelsäure bei 110°C für 4 Stunden am Rückflusskühler erhitzen, danach mit Eiswasser quenchen, abfiltrieren, mit destilliertem Wasser mehrfach waschen, in einem Ofen trocknen und dann für eine Stunde bei 500°C kalzinieren, um ihn dann letztlich mit Mörser und Pistill in eine Pulverform zu überführen.

US 2,470,872 lehrt die Herstellung säureaktivierter Aluminiumsilikate (Sub-Bentonite) mit Schwerpunkt auf der Herstellung säureaktivierten Montmorillonits, wobei nach der in der Hitze erfolgten Säurebehandlung eine Quenchung in kaltem Wasser, ein Säure-und Salzfrei-Waschen, eine Filtration, ein Trocknen sowie eine Vermahlung vorgesehen sind (dort Example 1). Die Lehre dieser Schrift repräsentiert eines der sogenannten "nassen" Verfahren.

In diesem Zusammenhang und als weitere Referenz zur Gewinnung säureaktivierter Aluminiumsilikate gemäß Stand der Technik sei auch auf die Lehre der Auslegeschrift DE 1 063 127 hingewiesen, die ein Verfahren zur Umwandlung von Kaolinton in technisch verwendbare, adsorptionsfähige Kontaktmassen beschreibt und sich eines sogenannten "trockenen" Verfahrens bedient, das vorsieht, nach erfolgter Säurebehandlung das Aluminiumsilikat nicht auszuwaschen , sondern direkt zu Kalzinieren, so dass dadurch die chemische Bruttozusammensetzung des Tons unverändert bleiben soll.

Unter Würdigung der in der Siloxanchemie bisher mit säureaktivierten Aluminiumsilikaten erzielten Erfolge erweist sich jedoch bei der technischen Verwendung dieser Katalysatoren deren grundsätzliche Neigung zum Gerüstumbau während ihrer Lagerung insbesondere unter nicht inertisierten Bedingungen als nachteilig. Alterungsphänomene, beispielsweise noch zusätzlich gefördert durch gewöhnliche Luftfeuchtigkeit sind innerhalb weniger Tage im Stande, irreversible Gerüstumlagerungen im zuvor säurebehandelten Aluminiumsilikat hervorzurufen.

So zeigt die speziell auf das Stabilitätsverhalten säurebehandelter Montmorillonite ausgerichtete Studie von C.N. Rhodes und D.R. Brown "Autotransformation and Ageing of Acid-treated Montmorillonite Catalysts: A Solid-state 27Al NMR Study" (J. Chem. Soc. Faraday Trans., 1995, 91 (6), 1031-1035), dass der Nachteil dieser Materialien in ihrer inhärenten Instabilität liegt, die zu Veränderungen ihrer chemischen und physikalischen Eigenschaften während ihrer Alterung führt. Durch kombinierten Einsatz von Elementaranalyse und Festkörper ²⁷Al-NMR (magic-angle spinning NMR) ist ein tiefer Einblick in die Alterungsprozesse säurebehandelten Montmorillonits möglich geworden, weil man nicht zuletzt durch die ²⁷Al-NMR eine einfache Unterscheidung zwischen oktaedrisch- und tetraedrischkoordinierten Oxo-Aluminiumzentren vornehmen kann. Für die Untersuchung wurden kommerziell verfügbare, säurebehandelte Montmorillonite (Fulcat 22A und ein Eisen-armer Texas Montmorillonit von der Firma Laporte) eingesetzt, die man jeweils in Form einer 1%igen Suspension mit 30 Vol.%iger Schwefelsäure unter schnellem Rühren bei 95°C behandelt, danach mit entionisiertem Wasser gewaschen und bei 60°C getrocknet hat. C.N. Rhodes und D.R. Brown machen in der betreffenden Studie deutlich, dass während der Säurebehandlung einer Montmorillonit-Tonerde ein lonenaustausch stattfindet, bei dem Al³⁺ und andere Metallkationen durch Protonen (H⁺) ersetzt werden. Als Folge davon delaminiert das in Schichten aufgebaute Tonmineral sukzessive und dessen Fähigkeit als Kationenaustauscher sinkt. Als Hauptalterungsprozess wird die Autotransformation des H⁺-ausgetauschten Tons in eine Al³⁺ (und in gewissem Ausmaß auch Mg²⁺- und Fe³⁺-) ausgetauschte Form des Tons betrachtet, bei der H⁺-Ionen in das Festkörpergitter und im Gegenzug Metallionen zu Austauschplätzen wandern. Diese Autotransformation kann bereits unter den belastenden Bedingungen einer technisch durchgeführten Säurebehandlung insbesondere bei erhöhter Temperatur über eine längere Zeit hinweg eintreten und wird, wie die Autoren C.N. Rhodes und D.R. Brown überzeugend belegen, durch (hohe) Feuchtigkeit bei der Lagerung des säureaktivierten Montmorillonits gefördert, so dass man sowohl einen Verlust an lonenaustauschkapazität als auch Azidität gewärtigt.

Insbesondere dieser nicht vorhersehbare Azididätsverlust ist es, der den Einsatz säurebehandelter Aluminiumsilikate, vorzugsweise säurebehandelter Montmorillonite zu einer großen Unsicherheit bei der technischen Herstellung (Äquilibrierung) insbesondere von anspruchsvollen Wasserstoff-tragenden Siloxanen werden lässt.

Abhängig von der angestrebten Zielstruktur des jeweiligen Wasserstoff-tragenden Siloxans kommt der im Äquilibriersystem wirksamen Azidität eine Schlüsselbedeutung zu.

So stellt z.B. die SiH-Funktion erhaltende Äquilibrierung von sowohl Dimethylhydrogensiloxygruppentragenden als auch Methylhydrogensiloxyeinheiten-tragenden Siloxanen in der Äquilibriermatrix die bis heute größte Herausforderung dar, so dass Supersäuren wie die Perfluoralkansulfonsäuren, insbesondere Trifluormethansulfonsäure und Perfluorbutansulfonsäure nach wie vor die bevorzugten Homogenkatalysatoren für die industrielle Äquilibrierung dieser besonderen Wasserstoffsiloxane sind.

Die Schwierigkeit bei der Äquilibrierung dieser Dimethylhydrogensiloxygruppen tragenden, unverzweigten, jedoch auch noch Methylhydrogensiloxygruppen und Dimethylsiloxygruppen aufweisenden Wasserstoffsiloxanen liegt darin, eine weitestgehend statistische Gleichverteilung von SiH-Funktionen entlang der Oligomerkette zu erreichen, ohne dass dabei zu viele von den empfindlichen Dimethylhydrogen-siloxygruppen durch dehydrogenative Prozesse oder Dimethylsilanabspaltung verloren gehen.

Im Gegensatz zu perfluorierten Supersäuren ist die wirksame Azidität säurebehandelter Aluminiumsilikate und auch beispielsweise sulfonsaurer lonenaustauscherharze in SiH-Gruppen enthaltenden Siloxanmatrices deutlich niedriger, so dass es beim Einsatz dieser Katalysatoren sehr darauf ankommt, die geeigneten Reaktionsparameter für das jeweilige Äquilibriersystem zu finden.

Die benötigte Azidität richtet sich dabei konkret nach der zu lösenden Äquilibrieraufgabe, das heißt nach der Struktur des angestrebten Wasserstoffsiloxans. Die Synthese von α,ω-Dihydrogenpolydimethylsiloxanen erhebt dabei die geringsten Ansprüche an die vom Katalysator ausgeübte Azidität, das heißt seiner Möglichkeit, Protonen bereitzustellen.

Setzt man zum Beispiel ein Gemisch bestehend aus Octamethylcyclotetrasiloxan und Tetramethyldisiloxan unter saurer Katalyse zu α,ω-Dihydrogen-polydimethylsiloxanen um, so benötigt man für die Öffnung eines Octamethylcyclotetrasiloxan-Moleküls eingeleitet durch Protonierung des Sauerstoffatoms in einer darin enthaltenen SiOSi-Bindung theoretisch nur ein Proton.

Ebenfalls nur ein Proton wird z.B. für die Öffnung der im Tetramethyldisiloxanmolekül enthaltenen SiOSi-Bindung theoretisch benötigt. Die Einstellung der Oligomerkettenverteilung verlangt zudem eine vergleichsweise geringe protische Aktivität.

Vollkommen anders liegen die Verhältnisse jedoch z.B. bei denjenigen copolymeren Siloxanen, die Methylhydrogensiloxyeinheiten (D^{H}-Einheiten) und Dimethylsiloxy-Einheiten (D-Einheiten) neben Trimethylsilylgruppen (M-Einheiten) enthalten und die beispielsweise aus Poly(methylhydrogen)siloxan und Octamethylcyclotetrasiloxan und Hexamethyldisiloxan unter saurer Katalyse hergestellt werden. Für die Öffnung eines Octamethylcyclotetrasiloxan-Moleküls nach Protonierung des Sauerstoffatoms in einer der 4 darin enthaltenen SiOSi-Bindungen wird theoretisch nur ein Proton benötigt. Gleichfalls nur ein Proton ist für die Einleitung der Öffnung der im Hexamethyldisiloxan-Molekül enthaltenen SiOSi-Bindung theoretisch erforderlich. Auch die molekulare Zerlegung des Poly(methylhydrogen)siloxans benötigt pro Siloxanylbindung (SiOSi-Bindung) theoretisch jeweils nur 1 Proton. Um jedoch eine statistische Verteilung der Methylhydrogensiloxy-Einheiten entlang der Oligomerketten des z.B. angestrebten Poly(methylhydrogensiloxan)-Polydimethylsiloxan-Copolymers insbesondere in den für industrielle Silikonproduktion üblichen Zeitfenstern zu erreichen, werden ungleich mehr Protonen pro Volumen Reaktionsmasse benötigt, da nur ein nahezu zeitgleiches Aufbrechen und Neuknüpfen vieler SiOSi-Bindungen ein Copolymer hervorbringt, das keine Kumulation(en) von Methylhydrogensiloxyeinheiten (= D^{H}-Einheiten) innerhalb der Siloxanoligomerketten aufweist.

Diese rein statistisch-theoretische Betrachtung der für die Äquilibrierung solcher Siloxancopolymeren benötigten Azidität erfährt ihre experimentelle Untermauerung durch die Publikation von G. Sauvet, M. Moreau. G. Hélary, E. Daudet, P. Cancouet , "Functional polysiloxanes. I. Microstructure of poly-(hydrogenmethylsiloxane-co-dimethylsiloxane)s obtained by cationic copolymerization" in J. Polymer Science, Part A: Polymer Chemistry Vol. 38, 826-36 (2000), in der die Autoren (auf Seite 833, ibid.) zu der klaren Folgerung gelangen, dass eine Siloxanbindung (SiOSi) zwischen zwei D^{H}-Einheiten weniger reaktiv als diejenige zwischen zwei D-Einheiten ist, was unmittelbar die in der sauren Äquilibrierung involvierten Teilreaktionen wie Backbiting, Crosslinking und Azidolyse beeinflusst.

Die Kumulation von Methylhydrogensiloxygruppen ist vorzugsweise weitestmöglich zu vermeiden, da sich die spätere Verwendungsfähigkeit der aus Wasserstoffsiloxan-Äquilibraten in Hydrosilylierungsreaktionen, insbesondere in solchen, bei denen mit Hilfe von Polyethergemischen Polyethersiloxane für anspruchsvolle tensidische Anwendungen gewonnen werden, wie zum Beispiel als Stabilisator in Polyurethanschäumen, unmittelbar an das Strukturmerkmal von Copolymeren knüpft, deren Polyethertragende Si-Atome möglichst statistisch, das heißt weitestmöglich voneinander isoliert, weil durch D-Einheiten voneinander getrennt, über die Oligomerketten verteilt sind.

G. Sauvet et al. (Seite 835, rechte Spalte, ibid.) gelangen in ihrer zuvor genannten Publikation (s.o.; in J. Polymer Science, Part A: Polymer Chemistry Vol. 38, 826-36 (2000)) zu der Aussage, dass die Kenntnis der Verteilung von D- und D^{H}-Einheiten in der Kette der Schlüssel zum Verständnis der Eigenschaften der (SiH)-Copolymeren an sich und noch viel mehr der Eigenschaften der daraus abgeleiteten, funktionalisierten Derivate ist. Die Autoren weisen auf den direkten Einfluss der Verteilung von D- und D^{H}-Einheiten in der Kette auf die Reaktionsgeschwindigkeit bei Hydrosilylierungsrektionen hin.

In diesem Zusammenhang haben P. Cancouet, S. Pernin, G. Hélary, G. Sauvet in ihrem Artikel "Functional polysiloxanes. II. Neighboring effect in the hydrosilylation of poly(hydrogenmethylsiloxane-co-dimethylsiloxane)s by allylglycidylether" in J. Polymer Science, Part A: Polymer Chemistry, Vol. 38, 837-45 (2000) den Nachbargruppeneffekt bei der hydrosilylierenden Anlagerung von Allylglycidylether an Poly(methylhydrogensiloxan)-Polydimethylsiloxan-Copolymere untersucht und aufgezeigt, dass die Präsenz von Methylhydrogensiloxy-Diaden (D^{H}- D^{H}) zu einer beschleunigten Hydrosilylierung führt, während isolierte, das heißt von D-Einheiten umgebene D^{H}-Einheiten(D-D^{H}-D) eine langsamere Reaktionskinetik zeigen.

Vor dem Hintergrund dieses Befundes ist dem Fachmann verständlich, dass die Mikrostruktur der Wasserstoffsiloxane insbesondere bei der Anlagerung von Polyethergemischen mit ihrer Bandbreite an Individualreaktivitäten einen maßgeblichen Einfluss auf die spätere Zielstruktur des Polyethersiloxan-Copolymers nimmt.

Methoden zur Ermittlung der molekularen Feinstruktur in Wasserstoffsiloxanen sind bekannt. So benutzten G. Sauvet et al. in der oben genannten Pubilkation (s.o.; J. Polymer Science, Part A: Polymer Chemistry Vol. 38, 826-36 (2000)) insbesondere die hochauflösende ²⁹Si-NMR-Spektroskopie zum Nachweis von Diaden, Triaden, Pentaden, etc., das heißt, von Kumulationen von Methylhydrogensiloxygruppen in einem Poly(methylhydrogensiloxan)-Polydimethylsiloxan-Copolymer.

Bisher hat die NMR-Technik als prozessbegleitende Analysenmethode, speziell als Real-Time-Methode, jedoch keinen Platz in der industriellen Herstellung von Polyorganohydrogensiloxanen erlangt, was unter anderem an den Kosten für das zu installierende Equipment aber insbesondere auch an dem grundsätzlichen Problem liegt, Quellen extrem starker elektromagnetischer Strahlung wie NMR-Magneten und Messköpfe betriebssicher in explosionsgeschützten Produktionsanlagen unterzubringen.

Die Fragestellung einer prozessbegleitenden Analytik sucht die Lehre der WO2022/132446 A1 zu adressieren, indem dort speziell durch Beispiele gestützt, schwingungsspektroskopische Methoden wie die Infrarot- und die Ramanspektroskopie zur Ermittlung direkt miteinander verknüpfter (D^{H}-D^{H})- und voneinander getrennter (D-D^{H}-D)-Strukturen in der säurekatalysierten Äquilibrierung von Siloxanen, die als D-Quelle und Siloxanen, die als D^{H}-Quelle fungieren, zur Beurteilung des erzielten Verteilungsgrades herangezogen werden. Auf die Härtungsgeschwindigkeit in Siloxanelastomeren abstellend, wird ein direkter Zusammenhang zwischen der schwingungsspektroskopisch ermittelten Konzentration entkoppelter, das heißt statistisch verteilter SiH-Gruppen und der Härtungskinetik bei Verwendung des jeweiligen SiH-Copolymeren gesehen. So benötigt (ibid. Seite 18, Tabelle 3) ein SiH-Copolymer aus Batch 1 nach 3 Stunden Äquilibrierzeit und einer SiH-IR-Intensität von 2,08 eingebracht in ein Elastomersystem 144,3 Sekunden zur Durchhärtung, während ein aus Batch 7 stammendes SiH-Copolymer nach 16 Stunden Äquilibrierzeit und mit einer gemessenen SiH-IR-Intensität von 3,32 bereits nach nur 61,4 Sekunden zur Härtung des Elastomersystems führt.

Insbesondere als Zielprodukte die verschiedenartigsten Härtungssysteme (Kondensations- und/ oder Hydrosilylierungs-härtbare Produkte) ansteuernd, soll die in der WO2022/132446 A1 dargestellte Methode helfen, Chargenzeiten zu minimieren und gleichzeitig eine höhere statistische Uniformität des äquilibrierten SiH-Copolymers zu erreichen.

Die vorliegende Erfindung beschäftig sich, insbesondere vor dem zuvor genannten Hintergrund, mit der Herstellung von Wasserstoffsiloxanen und zwar bevorzugt solchen, die bei weitestgehend statistischer Gleichverteilung von SiH-Funktionalität sowohl über seitständiges SiH in Form von Methylhydrogensiloxygruppen als auch über Dimethylhydrogensiloxygruppen sowie Dimethy-Isiloxygruppen sowie vorzugsweise noch über Trimethylsilylgruppen verfügen. Insbesondere die zuvor beschriebenen Nachteile einer mangelnden Alterungsbeständigkeit säureaktivierter Aluminiumsilikate vor Augen, war es die Aufgabe der vorliegenden Erfindung, ein weiteres Verfahren zur Herstellung von Wasserstoffsiloxanen unter Verwendung eines Äquilibrierungskatalysator bereitzustellen, vorzugsweise mit Blick auf die Äquilibrierung von Dimethylhydrogensiloxygruppen tragenden, unverzweigten, jedoch auch noch Methylhydrogensiloxygruppen und Dimethylsiloxygruppen aufweisenden Wasserstoffsiloxanen, vorzugsweise mit der mittleren Strukturformel gemäß Formel (1): 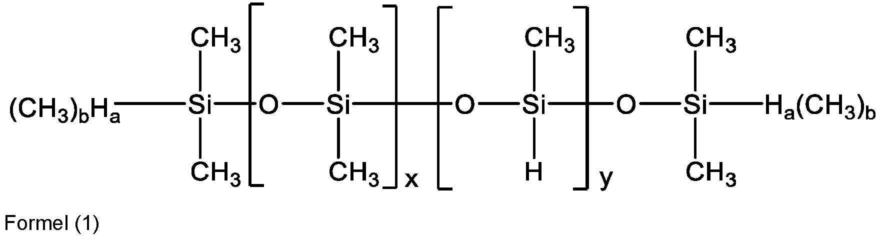 um vorzugsweise eine weitestgehend statistische Gleichverteilung von SiH-Funktionen entlang der Oligomerkette zu erreichen, bevorzugt ohne dass dabei zu viele von den empfindlichen Dimethylhydrogen-siloxygruppen durch dehydrogenative Prozesse oder Dimethylsilanabspaltung verloren gehen,
wobei in Formel (1) gilt:
0 ≤ x ≤ 200, bevorzugt 20 ≤ x ≤ 160, besonders bevorzugt 30 ≤ x ≤ 80,
1 ≤ y ≤ 30, bevorzugt 2 ≤ y ≤ 26, besonders bevorzugt 2 ≤ y ≤ 10,
0,4 ≤ a ≤ 1,0, bevorzugt 0,6 ≤ a ≤ 0,95,
0 ≤ b ≤ 0,6, bevorzugt 0,05 ≤ b ≤ 0,4,
a+b=1,
besonders bevorzugt ist x + y + 2 ≥ 13.

Erstaunlicherweise haben die Erfinder der hier vorliegenden Erfindung gefunden, dass man die Äquilibrierung von Wasserstoffsiloxanen, vorzugsweise des zuvor genannten Strukturtyps, in zuverlässig-reproduzierbarer Weise durchführen kann, wenn man eine entsprechende Siloxanmischung mit pulverförmigem Aluminiumsilikat beaufschlagt, um unter Hinzufügen von Säure in-situ säuremodifiziertes Aluminiumsilikat herzustellen, und dann das Reaktionsgemisch reagieren zu lassen.

Der Gegenstand der Erfindung, welcher die zuvor genannte Aufgabe löst, ist ein Verfahren zur, vorzugsweise wasser- und lösemittelfreien, Herstellung von Wasserstoffsiloxanen unter Verwendung von säuremodifiziertem Aluminiumsilikat als Äquilibrierungskatalysator, wobei man ein aus mindestens zwei Siloxanen bestehendes Siloxangemisch, das mindestens ein SiH-funktionelles Siloxan enthält, unter Durchmischung mit pulverförmigem Aluminiumsilikat, vorzugsweise pulverförmigem Kaolin, beaufschlagt und unter Hinzufügen von Säure, vorzugsweise Mineralsäure, besonders bevorzugt konzentrierter Schwefelsäure, das säuremodifizierte Aluminiumsilikat in-situ herstellt, so dass sich ein Reaktionsgemisch bildet und dann das Reaktionsgemisch unter weiterer Durchmischung, und vorzugsweise Erwärmung, im Sinne einer Äquilibrierung reagieren lässt, vorzugsweise bis dass das Äquilibriergleichgewicht des angestrebten Wasserstoffsiloxans erreicht ist.

Wasserstoffsiloxane sind SiH-funktionelle Siloxane, das heißt Siloxane, welche mindestens eine SiH-Funktion, vorzugsweise mindestens zwei SiH-Funktionen tragen.

Es ist erfindungsgemäß bevorzugt, dass das Siloxangemisch aus mindestens zwei verschiedenen Siloxanen besteht, die zusammen über Methylhydrogensiloxygruppen, Dimethylhydrogensiloxygruppen und Dimethylsiloxygruppen sowie vorzugsweise über Trimethylsilylgruppen verfügen, wobei besonders bevorzugt einsetzbare Siloxane zum Beispiel Poly(methylhydrogen)siloxan, Tetramethylcyclotetrasiloxan, Hexamethyldisiloxan, Decamethylcyclopentasiloxan (D₅), Octamethylcyclotetrasiloxan, Tetramethyldisiloxan und/oder α,ω-Dihydrogenpolydimethylsiloxan sind.

Die erfindungsgemäße Lösung ist vollkommen überraschend, da bisherige Arbeiten des Standes der Technik, die auf die Nutzung säureaktivierter Aluminiumsilikate zur Äquilibrierung von Wasserstoffsiloxanen abstellen, im Unterschied zu der vorliegenden Erfindung eine Vorgehensweise beschreiben, die vorsieht, die zur Äquilibrierung vorgesehene Siloxanmatrix mit einem bereits zuvor säureaktivierten Aluminiumsilikat zu beaufschlagen, wobei dieses bereits zuvor säureaktivierte Aluminiumsilikat im Allgemeinen nach seiner Säurebehandlung neutral gewaschen und/oder auch noch getrocknet und/oder kalziniert und/ oder zerkleinert und/oder konfektioniert worden ist.

Dabei ist für den Fachmann die Tatsache noch verblüffender, dass die erfindungsgemäß, vorzugsweise unter sehr moderaten Bedingungen, in der Siloxanmatrix erfolgende, in-situ- Säuremodifizierung des eingesetzten pulverförmigen Aluminiumsilikates eine derartig hohe Äquilibrieraktivität hervorbringen kann, die es möglich machen kann, bereits nach kurzer Reaktionszeit eine weitestgehend statistische Gleichverteilung von SiH-Funktionen entlang der Oligomerkette des Wasserstoffsiloxans zu realisieren, ohne dass dabei, vorzugsweise mit Blick auf Dimethylhydrogensiloxygruppen, Methylhydrogensiloxygruppen und Dimethylsiloxygruppen aufweisende Wasserstoffsiloxane, zu viele von den empfindlichen Dimethylhydrogen-siloxygruppen durch dehydrogenative Prozesse oder auch durch Dimethylsilanabspaltung verloren gehen.

Nicht vorhersehbar in Sicht der oben genannten Arbeiten des Standes Technik zur Herstellung säureaktivierter Aluminiumsilikate war im Rahmen der vorliegenden Erfindung besonders auch die Leichtigkeit und die Geschwindigkeit mit der das in der zur Äquilibrierung vorgesehenen Siloxanmatrix eingebrachte pulverförmige Aluminiumsilikat, vorzugsweise pulverförmige Kaolin, unter der Einwirkung von Säure, vorzugsweise Mineralsäure, besonders bevorzugt konzentrierter Schwefelsäure, seine Aktivität als Äquilibrierungskatalysator erlangt.

Die hier vorliegenden Erfindung bzw. das erfindungsgemäße Verfahren zur Herstellung von Wasserstoffsiloxanen mit seiner erst in der Siloxanmatrix , das heißt, in dem aus mindestens zwei Siloxanen bestehenden Siloxangemisch, das mindestens ein SiH-funktionelles Siloxan enthält, vorzunehmenden Säuremodifizierung des Aluminiumsilikates ermöglicht vorteilhafterweise nicht nur eine konstant gleichbleibend hohe Äquilibrieraktivität des Katalysators in der Produktion von Wasserstoffsiloxanen, sondern wirkt sich auch unter dem Aspekt einer potentiellen Gesundheitsgefährdung bei der Beschickung beziehungsweise Beaufschlagung zum Beispiel eines technischen Äquilibrierreaktors mit dem pulverförmigen Aluminiumsilikat positiv aus. Der erforderliche Atem- und Hautschutz der Produktionsmitarbeiter gestaltet sich bei der Handhabung eines nicht bereits Säuremodifizierten, pulverförmigen Aluminiumsilikates deutlich einfacher. Im Falle des besonders bevorzugten pulverförmigen Kaolins sei in diesem Zusammenhang noch der Hinweis gegeben, dass Kaolin in der Lebensmittelindustrie bis zum 31.01.2014 in den Funktionsklassen "Trägerstoffe, Trennmittel und Emulgatoren" unter der Europäischen Zulassungsnummer E 559 zugelassen war.

Der durch die vorliegende Erfindung ermöglichte Verzicht auf aufwändige Verfahrensschritte wie z.B. Säurewaschung, Neutralwaschung, Trocknung oder sogar Calcinierung oder Sinterung gereicht dem erfindungsgemäßen Verfahren unter dem Aspekt der Ressourcenschonung zum Vorteil. Energie- und Ressourcen-verbrauchende Verfahrensschritte können daher vermieden werden.

Es ist erfindungsgemäß besonders bevorzugt, die Äquilibrierung zur Herstellung von Wasserstoffsiloxanen in Substanz durchzuführen, das heißt, die erfindungsgemäße Äquilibrierung vorzugsweise wasser- und lösemittelfrei durchzuführen, also vorzugsweise ohne die Verwendung von Lösungsmitteln, insbesondere ohne die Verwendung von organischen Lösungsmitteln und vorzugsweise ohne Wasserzusatz, wobei allerdings aus der erfindungsgemäß einzusetzenden Säure und/oder aus dem erfindungsgemäß einzusetzenden pulverförmigen Aluminiumsilikat stammende, kleinere Mengen Wasser, die bezogen auf die Gesamtmenge dieser beiden Einsatzstoffe in Summe vorzugsweise ≤ 5 Massenprozent, bevorzugt ≤ 4 Massenprozent betragen können, enthalten sein können.

Erfindungsgemäß gelangt pulverförmiges Aluminiumsilikat zum Einsatz. Pulverförmiges Aluminiumsilikat ist dem Fachmann bekannt. Erfindungsgemäß bevorzugt einsetzbare, pulverförmige Aluminiumsilikate weisen vorzugsweise Teilchengrößen kleiner 250 Mikrometer, bevorzugt kleiner 100 Mikrometer, besonders bevorzugt kleiner 80 Mikrometer auf. Die Teilchengröße kann mit den bekannten Methoden der Teilchengrößenbestimmung ermittelt werden, vorzugsweise mit den bekannten Verfahren der Laserbeugung, bevorzugt unter Annahme kugelförmiger Partikelgeometrie.

Ein erfindungsgemäß ganz besonders bevorzugt einsetzbares pulverförmige Aluminiumsilikat ist pulverförmiges Kaolin, vorzugsweise der natürlich vorkommende pulverförmige Kaolin (CAS 1332-58-7), den man auch China-Clay nennt.

Pulverförmiges Kaolin ist dem Fachmann an sich bekannt. Vorzugsweise sind damit all jene pulverförmigen Tonmineralien umfasst, die im ungebrannten Zustand als hauptsächliche Tonmineralien Kaolinit, Halloysit, Dickit, Nakrit und/oder Anauxit enthalten, wobei Kaolinit besonders bevorzugt ist und besonders bevorzugt Hauptbestandteil von Kaolin ist. Kaolinit kann vorzugsweise durch folgende, bekannte idealisierte Formel beschrieben werden: Al₂O₃ 2 SiOz 2 H₂O.

Pulverförmiges Aluminiumsilikat, vorzugsweise pulverförmiger Kaolin ist kommerziell verfügbar. Beispielsweise ist entsprechender pulverförmiger Kaolin kommerziell erhältlich unter dem Handelsnamen Speswhite^{™} von IMERYS Minerals Ltd., Vereinigtes Königreich.

Es ist erfindungsgemäß bevorzugt, pulverförmiges Aluminiumsilikat, vorzugsweise pulverförmigen Kaolin, in Gesamtmenge von 0,3 Gew.-% bis 1,5 Gew.-%, weiter bevorzugt in Gesamtmenge von 0,5 Gew.-% bis 1,4 Gew.-% und besonders bevorzugt in Gesamtmenge von 0,75 Gew.-% bis 1,35 Gew.-% bezogen auf die Gesamtmenge des Siloxangemisches einzusetzen.

Säure, vorzugsweise Mineralsäure, besonders bevorzugt konzentrierte Schwefelsäure, wird erfindungsgemäß bevorzugt in Gesamtmenge von 30 bis 2500 Gewichts-ppm, besonders bevorzugt in Gesamtmenge von 100 bis 1500 Gewichts-ppm bezogen auf die Gesamtmenge des Siloxangemisches eingesetzt (Gewichts-ppm = Gewichtsanteil in ppm (ppm = parts-per-million)).

Konzentrierte Schwefelsäure ist dem Fachmann bekannt. Sie besitzt vorzugsweise einen Schwefelsäuregehalt von mindestens 96 Gewichtsprozent, besonders bevorzugt von mindestens 98 Gewichtsprozent.

Wie bereits erläutert, wird das Siloxangemisch unter Durchmischung mit pulverförmigen Aluminiumsilikat beaufschlagt und unter Hinzufügen von Säure wird in-situ säuremodifiziertes Aluminiumsilikat hergestellt, wonach man das Reaktionsgemisch unter weiterer Durchmischung, und vorzugsweise Erwärmung, im Sinne einer Äquilibrierung reagieren lässt.

Es ist erfindungsgemäß bevorzugt, die Äquilibrierung im Temperaturbereich von 25°C bis 95°C, besonders bevorzugt im Temperaturbereich von 40°C bis 80°C durchzuführen. Sie wird erfindungsgemäß bevorzugt in einem Zeitraum von 4 bis 12 Stunden, besonders bevorzugt in einem Zeitraum von 6 bis 9 Stunden durchgeführt.

Das Reaktionsgemisch wird am Ende der Äquilibrierung vorzugsweise neutralisiert, bevorzugt mit Natriumhydrogencarbonat, vorzugsweise in Mengen zwischen 0,25 Gew-% bis 1,0 Gew-%, bezogen auf die Menge des gesamten Siloxangemisches, und bevorzugt unter Hinzufügen von Wasser, vorzugsweise zwischen 100 Gewichts-ppm bis 600 Gewichts-ppm bezogen auf die Menge des gesamten Siloxangemisches, vorzugsweise über einen Zeitraum von 1 bis 6 Stunden.

Es ist erfindungsgemäß bevorzugt, das neutralisierte Reaktionsgemisch, vorzugsweise nach Hinzufügen einer Filterhilfe, von den Feststoffen abzutrennen, bevorzugt durch Filtration, und das äquilibrierte Wasserstoffsiloxan zu isolieren.

Bevorzugt einsetzbare Filterhilfen sind chemisch inerte Stoffe, die allein aufgrund physikalischmechanischer Wirkung den Filtrationsvorgang unterstützen können, vorzugsweise können behandelte oder unbehandelte Zellulose, Kieselgel, Kieselgur und/oder Perlit eingesetzt werden.

Es ist erfindungsgemäß bevorzugt, wenn das resultierende, äquilibrierte Wasserstoffsiloxan folgender mittleren Strukturformel (Formel 1) genügt 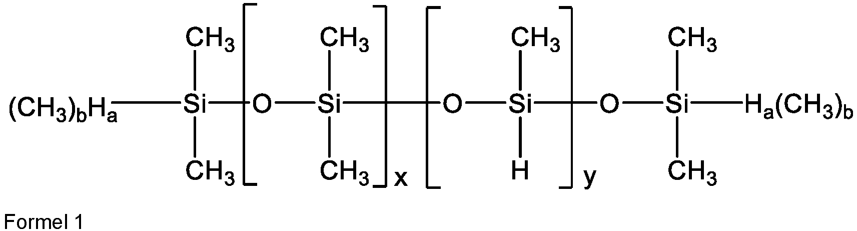 wobei gilt:
0 ≤ x ≤ 200, bevorzugt 20 ≤ x ≤ 160, besonders bevorzugt 30 ≤ x ≤ 80,
1 ≤ y ≤ 30, bevorzugt 2 ≤ y ≤ 26, besonders bevorzugt 2 ≤ y ≤ 10,
0,4 ≤ a ≤ 1,0, bevorzugt 0,6 ≤ a ≤ 0,95,
0 ≤ b ≤ 0,6, bevorzugt 0,05 ≤ b ≤ 0,4,
a+b=1,
besonders bevorzugt ist x + y + 2 ≥ 13.

Ein weiterer Gegenstand der Erfindung ist ein Wasserstoffsiloxan, herstellbar, vorzugsweise hergestellt, nach dem erfindungsgemäßen Verfahren, vorzugweise gemäß einem der Ansprüche 1 bis 12.

Ein weiterer Gegenstand der Erfindung ist die Verwendung des erfindungsgemäß herstellbaren Wasserstoffsiloxans als Reaktionspartner in einer Hydrosilylierungsreaktion zur Herstellung von Hydrosilylierungsprodukten, wobei die Hydrosilylierungsreaktion vorzugsweise in Anwesenheit eines Edelmetallkatalysators und mindestens einer ungesättigten organischen Verbindung, vorzugsweise terminal ungesättigten organischen Verbindung, bevorzugt terminal ungesättigten Alkenverbindungen erfolgt, welche ggf. noch weitere Substituenten tragen können; besonders bevorzugte ungesättigte organische Verbindungen sind terminal-ungesättigte Polyether, Allylglycidether, Glycerinmonoallylether, Allylglykol, Allyloxyethanol, Allylanisol, Allylphenol, Eugenol, Hexenol, C6-C20-Alken, Undecylensäure und/oder Vinylcyclohexenmonooxid, noch weiter bevorzugt sind terminal-ungesättigte Polyether, Allylglykol, Tetradecen, Hexadecen, Octadecen und/oder Undecylensäuremethylester, wobei ganz besonders bevorzugt terminal-ungesättigte Polyether, wie Allyl- und/oder Methallyl-funktionelle Polyether eingesetzt werden, und insbesondere bevorzugt terminal-ungesättigte Allylpolyether eingesetzt werden.

Ein weiterer Gegenstand der Erfindung ist Verwendung von erfindungsgemäß herstellbaren Hydrosilylierungsprodukten
(a) als grenzflächenaktive Substanz, als Dispergieradditiv, Entschäumer, Benetzungshilfsmittel, Hydrophobierungsmittel und/oder vernetzendes Additiv, vorzugsweise zum Einsatz in Pasten, Farben, Lacken, Überzügen, Beschichtungen, und/oder Anstrichmitteln,
(b) in Reinigungs- und/oder Pflegeformulierungen geeignet zur Reinigung und/oder Pflege harter Oberflächen und/oder geeignet zur Reinigung, Behandlung und/oder Nachbehandlung von Textilien, sowie in kosmetischen Produkten,
(c) als Schaumstabilisatoren oder Schaumadditive für Polyurethanschäume oder
(d) als Adjuvant zur Verbesserung der Wirkung von Pflanzenschutzwirkstoffen und/oder als Träger für Pflanzenschutzwirkstoffe, wobei die Pflanzenschutzwirkstoffe vorzugsweise aus mikrobiologischen Pflanzenschutzwirkstoffen ausgewählt sind.

Das folgende Beispiel dient allein zur weiteren Erläuterung der vorliegenden Erfindung und stellt keinerlei Beschränkung der vorliegenden Erfindung dar.

### Beispiel:

Im Rahmen vorliegender Erfindung wurden die ²⁹Si-NMR-Spektren mit einer Messfrequenz von 79,49 MHz in einem Bruker Avance III Spektrometer, ausgerüstet mit einem 287430 Probenmesskopf mit einer Spaltweite von 10 mm, gelöst bei 22°C in CDCl₃ und gegen Tetramethylsilan (TMS) als externem Standard (d(²⁹Si) = 0,0 ppm) aufgenommen.

Der im erfindungsgemäßen Beispiel eingesetzte China-Clay (Speswhite^{™}, Imerys Minerals Ltd.) ist ein pulverförmiger Kaolin, der in Lagerstätten im Südwesten Englands abgebaut wird.

### Beispiel 1 (erfindungsgemäß)

Durch die erfindungsgemäße Äquilibrierung wurde folgende mittlere Wasserstoffsiloxanstruktur angestrebt: 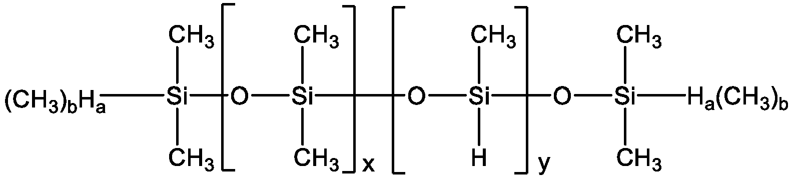 wobei x = 36,85 und y = 3,15, und a =0,92 und b = 0,08 sind.

Hierzu wurden in einem zuvor mit Argon inertisierten, 2000-ml-Vierhalskolben ausgestattet mit KPG-Glasflügelrührer, Innenthermometer und aufgesetztem Rückflußkühler 99,18 g Poly(methylhydro-gen)siloxan (gasvolumetrisch bestimmter SiH-Wert: 15,6 mol/kg), 1077,51 g Decamethylcyclopentasiloxan (D₅) und 323,32 g α,ω-Dihydrogenpolydimethylsiloxan (gasvolumetrisch bestimmter SiH-Wert: 2,8 mol/kg) unter Rühren vorgelegt und dann mit 19,5 g China-Clay (1,3 Gewichts-% Speswhite^{™} bezogen auf die gesamte Siloxanmasse) sowie mit 1,5 g (0,82 ml) konzentrierter Schwefelsäure (99 Gewichts-%) (1000 Gewichts-ppm bezogen auf die gesamte Siloxanmasse) beaufschlagt. Der gut gerührte Reaktionsansatz wird für einen Zeitraum von 7 Stunden auf 60°C erwärmt, wobei sich bereits nach 4 Stunden (Probenahme) eine Zielviskosität von 40 mPas einstellte.

Nach 7 Stunden wurden bei 60°C unter Rühren 7,5 g Natriumhydrogencarbonat (5000 Gewichts-ppm bezogen auf die gesamte Siloxanmasse), 0,45 g entionisiertes Wasser (300 Gewichts-ppm bezogen auf die gesamte Siloxanmasse) und 19,5 g Filterhilfe (Harborlite^{®} 900) hinzugefügt. Die Neutralisation ließ man insgesamt 4 Stunden laufen, ehe man die festen Bestandteile mit Hilfe einer Filterpresse (K 450 Filterscheibe) abtrennte. Ein Tropfen des erhaltenen, klaren Filtrats zeigte auf feuchtem Universalindikatorpapier neutrale Reaktion. Eine kleine Menge des Filtrats wurde entnommen und mit Hilfe der ²⁹Si-NMR-Spektroskopie analysiert. Das erhaltene Spektrum sichert die oben angestrebte Struktur des Wasserstoffsiloxans.

## Patentansprüche

1. Verfahren zur Herstellung von Wasserstoffsiloxanen unter Verwendung von säuremodifiziertem Aluminiumsilikat als Äquilibrierungskatalysator, **dadurch gekennzeichnet, dass** man ein aus mindestens zwei Siloxanen bestehendes Siloxangemisch, das mindestens ein SiH-funktionelles Siloxan enthält, unter Durchmischung mit pulverförmigen Aluminiumsilikat beaufschlagt und unter Hinzufügen von Säure das säuremodifizierte Aluminiumsilikat in-situ herstellt, so dass sich ein Reaktionsgemisch bildet und dann das Reaktionsgemisch unter weiterer Durchmischung im Sinne einer Äquilibrierung reagieren lässt.

2. Verfahren nach Anspruch 1, **dadurch gekennzeichnet, dass** das Siloxangemisch aus mindestens zwei verschiedenen Siloxanen besteht, die zusammen über Methylhydrogensiloxygruppen, Dimethylhydrogensiloxygruppen und Dimethylsiloxygruppen sowie vorzugsweise über Trimethylsilylgruppen verfügen.

3. Verfahren nach Anspruch 1 oder 2, **dadurch gekennzeichnet, dass** die Äquilibrierung wasser- und lösemittelfrei durchgeführt wird.

4. Verfahren nach einem der Ansprüche 1 bis 3, **dadurch gekennzeichnet, dass** als pulverförmiges Aluminiumsilikat pulverförmiges Kaolin eingesetzt wird.

5. Verfahren nach einem der Ansprüche 1 bis 4, **dadurch gekennzeichnet, dass** man pulverförmiges Aluminiumsilikat, vorzugsweise pulverförmiges Kaolin, in Gesamtmenge von 0,3 Gew.-% bis 1,5 Gew.-%, bevorzugt 0,5 Gew.-% bis 1,4 Gew.-%, besonders bevorzugt 0,75 Gew.-% bis 1,35 Gew.-% bezogen auf die Gesamtmenge des Siloxangemisches einsetzt.

6. Verfahren nach einem der Ansprüche 1 bis 5, **dadurch gekennzeichnet, dass** man Säure, vorzugsweise Mineralsäure, besonders bevorzugt konzentrierte Schwefelsäure, in Gesamtmenge von 30 bis 2500 Gewichts-ppm, bevorzugt 100 bis 1500 Gewichts-ppm bezogen auf die Gesamtmenge des Siloxangemisches einsetzt.

7. Verfahren nach einem der Ansprüche 1 bis 6, **dadurch gekennzeichnet, dass** man die Äquilibrierung im Temperaturbereich von 25°C bis 95°C, bevorzugt im Temperaturbereich von 40°C bis 80°C durchführt.

8. Verfahren nach einem der Ansprüche 1 bis 7, **dadurch gekennzeichnet, dass** man die Äquilibrierung in einem Zeitraum von 4 bis 12 Stunden, bevorzugt in einem Zeitraum von 6 bis 9 Stunden durchführt.

9. Verfahren nach einem der Ansprüche 1 bis 8, **dadurch gekennzeichnet, dass** man das Reaktionsgemisch am Ende der Äquilibrierung neutralisiert, vorzugsweise mit Natriumhydrogencarbonat und unter Hinzufügen von Wasser, bevorzugt über einen Zeitraum von 1 bis 6 Stunden.

10. Verfahren nach Anspruch 9, **dadurch gekennzeichnet, dass** man das neutralisierte Reaktionsgemisch von den Feststoffen abtrennt, bevorzugt durch Filtration, bevorzugter nach Hinzufügen einer Filterhilfe, und das äquilibrierte Wasserstoffsiloxan isoliert.

11. Verfahren nach einem der Ansprüche 1 bis 10, **dadurch gekennzeichnet, dass** es zur Herstellung von unverzweigten Wasserstoffsiloxanen dient, welche Dimethylhydrogensiloxygruppen, Methylhydrogensiloxygruppen und Dimethylsiloxygruppen sowie vorzugsweise Trimethylsilylgruppen aufweisen.

12. Verfahren nach einem der Ansprüche 1 bis 11, **dadurch gekennzeichnet, dass** das resultierende, äquilibrierte Wasserstoffsiloxan folgender mittleren Strukturformel (Formel 1) genügt: 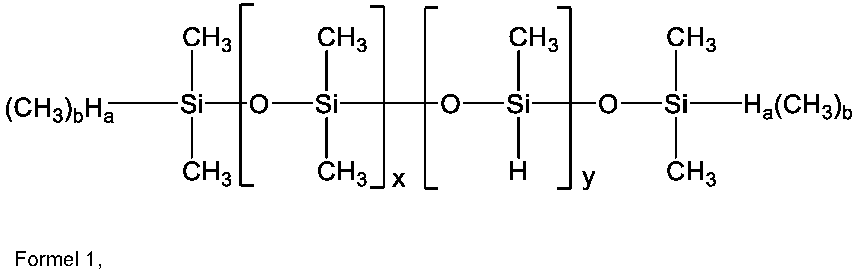 wobei gilt:
0 ≤ x ≤ 200, bevorzugt 20 ≤ x ≤ 160, besonders bevorzugt 30 ≤ x ≤ 80,
1 ≤ y ≤ 30, bevorzugt 2 ≤ y ≤ 26, besonders bevorzugt 2 ≤ y ≤ 10,
0,4 ≤ a ≤ 1,0, bevorzugt 0,6 ≤ a ≤ 0,95,
0 ≤ b ≤ 0,6, bevorzugt 0,05 ≤ b ≤ 0,4,
a+b=1,
besonders bevorzugt ist x + y + 2 ≥ 13,

13. Wasserstoffsiloxan, herstellbar, vorzugsweise hergestellt, nach einem Verfahren nach einem der Ansprüche 1 bis 12.

14. Verwendung des Wasserstoffsiloxans nach Anspruch 13 als Reaktionspartner in einer Hydrosilylierungsreaktion zur Herstellung von Hydrosilylierungsprodukten, wobei die Hydrosilylierungsreaktion vorzugsweise in Anwesenheit eines Edelmetallkatalysators und mindestens einer ungesättigten organischen Verbindung, vorzugsweise terminal ungesättigten organischen Verbindung, bevorzugt terminal ungesättigten Alkenverbindungen, welche ggf. noch weitere Substituenten tragen können, besonders bevorzugt terminal-ungesättigte Polyether, Allylglycidether, Glycerinmonoallylether, Allylglykol, Allyloxyethanol, Allylanisol, Allylphenol, Eugenol, Hexenol, C6-C20-Alken, Undecylensäure und/oder Vinylcyclohexenmonooxid, noch weiter bevorzugt terminal-ungesättigte Polyether, Allylglykol, Tetradecen, Hexadecen, Octadecen und/oder Undecylensäuremethylester, erfolgt, wobei ganz besonders bevorzugt terminal-ungesättigte Polyether, wie Allyl- und/oder Methallyl-funktionelle Polyether eingesetzt werden, und insbesondere bevorzugt terminal-ungesättigte Allylpolyether eingesetzt werden.

15. Verwendung von Hydrosilylierungsprodukten nach Anspruch 14
(a) als grenzflächenaktive Substanz, als Dispergieradditiv, Entschäumer, Benetzungshilfsmittel, Hydrophobierungsmittel und/oder vernetzendes Additiv, vorzugsweise zum Einsatz in Pasten, Farben, Lacken, Überzügen, Beschichtungen, und/oder Anstrichmitteln.
(b) in Reinigungs- und/oder Pflegeformulierungen geeignet zur Reinigung und/oder Pflege harter Oberflächen und/oder geeignet zur Reinigung, Behandlung und/oder Nachbehandlung von Textilien, sowie in kosmetischen Produkten,
(c) als Schaumstabilisatoren oder Schaumadditive für Polyurethanschäume oder
(d) als Adjuvant zur Verbesserung der Wirkung von Pflanzenschutzwirkstoffen und/oder als Träger für Pflanzenschutzwirkstoffe, wobei die Pflanzenschutzwirkstoffe vorzugsweise aus mikrobiologischen Pflanzenschutzwirkstoffen ausgewählt sind.
